# EUROPEAN PATENT APPLICATION

(11) **EP 4 694 080 A1**
(43) Date of publication of application: **11.02.2026**
(21) Application number: 24778130.5
(22) Date of filing: 28.03.2024
(51) Int. Cl.: H04L 51/046

(54) **INFORMATION PROCESSING METHOD AND APPARATUS, AND ELECTRONIC DEVICE**

(30) Priority: 30.03.2023 CN 202310335687
(71) Applicant: Beijing Zitiao Network Technology Co., Ltd., Beijing 100190 (CN)
(72) Inventor: MA, Xinya, Beijing 100028 (CN); XIE, Lizheng, Beijing 100028 (CN); SHEN, Bowen, Beijing 100028 (CN); ZHENG, Kang, Beijing 100028 (CN); TANG, Rongyi, Beijing 100028 (CN); SHEN, Duxian, Beijing 100028 (CN); XIE, Yuanhang, Beijing 100028 (CN); ZHAO, Tian, Beijing 100028 (CN)
(74) Representative: Isarpatent
(86) International application number: PCT/CN2024/084372
(87) International publication number: WO 2024/199344

(57) **Abstract**

Embodiments of the present disclosure provide an information processing method and apparatus, and an electronic device, the method comprising: obtaining information of an attendee of a scheduled conference, the scheduled conference being a conference having a conference identifier before the conference starts; determining an access permission of the attendee to a group session based on whether the attendee belongs to an appointed participant of the scheduled conference, the access permission including a first permission or a second permission; the first permission being lower than the second permission, the group session being implemented in a predetermined manner; members of the group session including a plurality of appointed participants of the scheduled conference; and presenting information of the group session to the attendee according to the permission.

## Description

### CROSS-REFERENCE TO RELATED APPLICATIONS

The present disclosure is based on and claims priority of the Chinese Patent Application No. 202310335687.3 filed on March 30, 2023, the disclosure of which is incorporated by reference herein in its entirety.

### TECHNICAL FIELD

Embodiments of the present disclosure relate to the field of computer technology, and in particular, to an information processing method and apparatus, and an electronic device.

### BACKGROUND

As a way of communication, multimedia conferencing allows people in different places to realize real-time, visual interaction through some kind of transmission medium. By performing interaction using multimedia conferencing, the geographically dispersed users can get together in one place and exchange information through images, sounds and other means, thereby improving the ability of both parties to understand the content and attaining the effect that people who are in different places feel like attending the same conference in person.

In a multimedia conference, there can be a plurality of attendees, which may include both temporary participants and appointed participants.

### SUMMARY

The embodiments of the present disclosure provide an information processing method and apparatus, and an electronic device.

In a first aspect, an embodiment of the present disclosure provides an information processing method, the method comprising: obtaining information of an attendee of a scheduled conference, the scheduled conference being a conference having a conference identifier before the conference starts; determining an access permission of the attendee to a group session based on whether the attendee belongs to an appointed participant of the scheduled conference, the access permission including a first permission or a second permission; the first permission being lower than the second permission, the group session being implemented in a predetermined manner; members of the group session including a plurality of appointed participants of the scheduled conference; and presenting information of the group session to the attendee according to the permission.

In a second aspect, an embodiment of the present disclosure provides an information processing method, the method comprising: displaying information of a scheduled conference on a client of a current attendee; and displaying information of a group session of the scheduled conference on a relevant page of the scheduled conference, the information of the group session including message content of the group session sent by a server to the client according to a permission of the attendee, the permission being determined according to whether the attendee is an appointed participant of the scheduled conference; wherein the permission includes a first permission and a second permission, the first permission being lower than the second permission; the group session is a session associated with the scheduled conference; and the group session is implemented in a predetermined manner.

In a third aspect, an embodiment of the present disclosure provides an information processing apparatus, the apparatus comprising: an obtaining unit, configured to obtain information of an attendee of a scheduled conference, the scheduled conference being a conference having a conference identifier before the conference starts; a determination unit, configured to determine an access permission of the attendee to a group session based on whether the attendee belongs to an appointed participant of the scheduled conference, the access permission including a first permission or a second permission; the first permission being lower than the second permission, the group session being implemented in a predetermined manner; members of the group session including a plurality of appointed participants of the scheduled conference; and a first display unit, configured to present information of the group session to the attendee according to the permission.

In a fourth aspect, an embodiment of the present disclosure provides an information processing apparatus, the apparatus comprising: a second display unit, configured to display information of a scheduled conference on a client of a current attendee; a third display unit, configured to display information of a group session of the scheduled conference on a relevant page of the scheduled conference, the information of the group session including message content of the group session sent by a server to the client according to a permission of the attendee, the permission being determined according to whether the attendee is an appointed participant of the scheduled conference; wherein the permission includes a first permission and a second permission, the first permission being lower than the second permission; the group session is a session associated with the scheduled conference; and the group session is implemented in a predetermined manner.

In a fifth aspect, an embodiment of the present disclosure provides an electronic device, comprising: a processor and a memory; wherein the memory stores computer execution instructions; the processor executes the computer execution instructions stored in the memory, causing the at least one processor to perform the information processing methods as recited in the first and second aspects and various possibilities of the first and second aspects.

In a sixth aspect, an embodiment of the present disclosure provides a computer-readable storage medium, in which computer execution instructions are stored, wherein a processor, when executing the computer execution instructions, implements the information processing methods as recited in the first and second aspects and various possibilities of the first and second aspects.

In a seventh aspect, an embodiment of the present disclosure provides a computer program product, including a computer program, which, when executed by a processor, implements the information processing methods as recited in the first and second aspects and various possibilities of the first and second aspects.

The information processing methods and apparatuses, and the electronic device provided by the present disclosure obtain information of an attendee of a scheduled conference, the scheduled conference being a conference having a conference identifier before the conference starts; determine an access permission of the attendee to a group session based on whether the attendee belongs to an appointed participant of the scheduled conference, the access permission including a first permission or a second permission, the first permission being lower than the second permission, the group session being implemented in a predetermined manner, members of the group session including a plurality of appointed participants of the scheduled conference; and present information of the group session to the attendee according to the permission.

### BRIEF DESCRIPTION OF THE DRAWINGS

In order to more clearly illustrate the technical solutions in the embodiments of the present disclosure or related art, the accompanying drawings required for use in the description of the embodiments or related art will be briefly introduced below. Obviously, the drawings described below are only some embodiments of the present disclosure, and for those skilled in the art, other drawings can be obtained based on these drawings without creative efforts.
FIG. 1 is a schematic diagram of an in-conference chat in a multimedia conference provided by the present disclosure;
FIG. 2 is a first schematic flowchart of an information processing method provided by an embodiment of the present disclosure;
FIG. 3 is a second schematic flowchart of an information processing method provided by an embodiment of the present disclosure;
FIG. 4 is a third schematic flowchart of an information processing method provided by an embodiment of the present disclosure;
FIG. 5 is a schematic structural block diagram of an information processing apparatus provided by an embodiment of the present disclosure;
FIG. 6 is a schematic structural block diagram of an information processing apparatus provided by an embodiment of the present disclosure;
FIG. 7 is a hardware structure schematic diagram of an electronic device provided by an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are part of the embodiments of the present disclosure, rather than all of the embodiments. Based on the embodiments in the present disclosure, all other embodiments obtained by those skilled in the art without creative efforts shall fall within the scope of protection of the present disclosure.

Network multimedia conferences may generally include different types, such as scheduled conferences and temporarily initiated multimedia conferences. A scheduled conference may be a conference determined by sending predetermined information to a server before a multimedia conference is initiated, the predetermined information including the conference subject, the conference start time and end time, and information of an attendee to be invited, etc. Since the scheduled conference sends the predetermined information to the server before the multimedia conference is initiated, the server will allocate a conference identifier (Conference Identity Document, ID) to the scheduled conference before the scheduled conference.

For the scheduled conference, the invited attendees in the predetermined information and an initiator of the scheduled conference can be called appointed participants. In some application scenarios, for the scheduled conference, there may also be non-appointed participants who join the scheduled conference. That is, the attendees of the scheduled conference may include appointed participants and non-appointed participants.

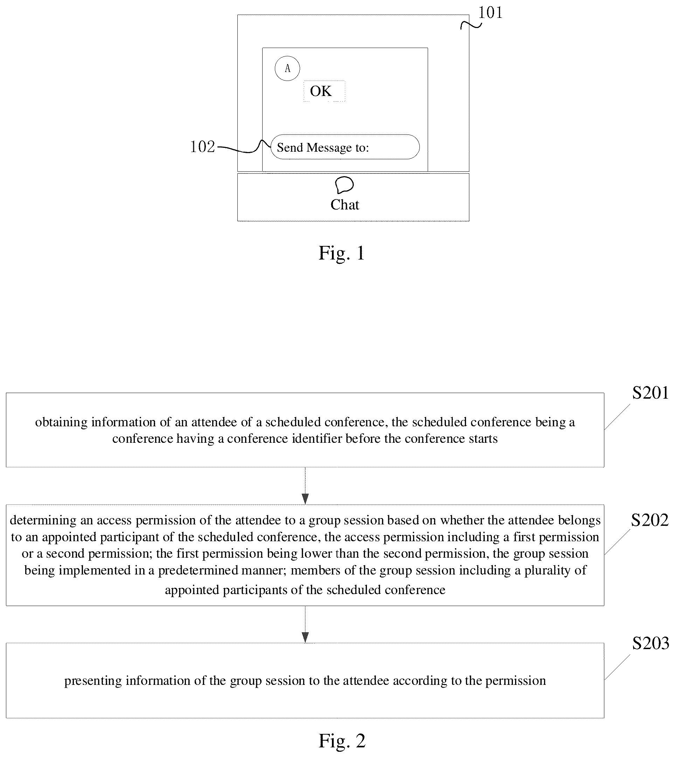

In a multimedia conference, the attendees have a need to make an in-conference chat. In order to meet the need, the multimedia conference may support an in-conference chat function. In the multimedia conference, any attendee can initiate an in-conference chat between the attendees to discuss related content in the multimedia conference. Referring to FIG. 1, it shows a schematic diagram of an in-conference chat in a multimedia conference provided by the present disclosure. A chat window 102 may be displayed on a multimedia information stream display interface 101 of the scheduled conference. The attendee may enter chat messages in a chat window, and the chat messages may be displayed in the chat window.

In this embodiment, the chat messages can be browsed by the appointed participants and the non-appointed participants (hereinafter referred to as temporary attendees). This in-conference chat method is not convenient for displaying chat content to different attendees in a differentiated manner, and thus it is not conducive to the information security of in-conference chat messages.

In order to solve the above problem, the present disclosure provides an information processing method, which supports creating a group session associated with a multimedia conference through a chat request in the multimedia conference, the group session may be created by a communication application system and is bound to the multimedia conference. In addition, if the attendees of the scheduled conference are group members of an existing session, reusing the existing group session is also supported. Chat information corresponding to respective permissions of different attendees is displayed to the different attendees through the group session, and the content of the group session displayed to the attendees can be differentiated by using the group session, so that the chat content browsed by the attendees can match the attendance identities of the attendees, which is conducive to improving the information security of the in-conference chat messages.

Referring to FIG. 2, it shows a first schematic flowchart of an information processing method provided by an embodiment of the present disclosure. As shown in FIG. 2, the information processing method comprises the following steps:

S201: obtaining information of an attendee of a scheduled conference, the scheduled conference being a conference having a conference identifier before the conference starts.

The execution subject of the information processing method in this embodiment may be a server that provides services for a multimedia conference.

The scheduled conference here may be a network multimedia conference. Before the multimedia conference is initiated, the server may allocate a conference identifier to the scheduled conference according to predetermined information sent by an initiator of the scheduled conference.

The predetermined information may include information of the initiator of the scheduled conference, invited attendees, the conference start time and end time, etc. In the present disclosure, the invited attendees and the initiator of the scheduled conference may be referred to as appointed participants.

Usually, for each scheduled conference, the execution subject sends conference request information to each invited attendee before the scheduled conference is initiated, and the invited attendee may feedback information of accepting the scheduled conference.

The execution subject may associate the conference identifier of the scheduled conference with information of the appointed participants of the scheduled conference.

The attendees here can be any attendees of the current scheduled conference, including appointed participants and temporary attendees.

The information of the attendees includes, but is not limited to, attendee identifiers, user group identifiers of user groups to which the attendees belong, and the conference identifier, etc. The attendee identifiers may be user identifiers used to distinguish different users. Organization identifiers can be used to distinguish different organizations.

The attendee identifiers include, but are not limited to, text, numbers and/or symbols. The user group identifiers may include, but are not limited to, text, numbers, and/or symbols.

Typically, the scheduled conference may have a pre-created schedule associated with the scheduled conference. The appointed participants of the scheduled conference are also called schedule participants.

The scheduled conference here may be a non-periodic scheduled conference or one conference among periodic conferences.

The periodic conferences may correspond to a periodic schedule.

S202: determining an access permission of the attendee to a group session based on whether the attendee belongs to an appointed participant of the scheduled conference, the access permission including a first permission or a second permission; the first permission being lower than the second permission, the group session being implemented in a predetermined manner; members of the group session including a plurality of appointed participants of the scheduled conference;

S203: presenting information of the group session to the attendee according to the permission.

The group session here may be a group session associated with the scheduled conference. The group session may be created based on a chat request initiated by an attendee in a scheduled conference in progress. That is, in the scheduled conference in progress, any attendee can initiate a chat request to the execution subject using the client. Upon receiving the chat request, the execution subject may create a group session associated with the scheduled conference. The members of the group session include the plurality of appointed participants described above. After creating the group session, the attendees can chat in the group session.

In addition, if the attendees of the scheduled conference are group members of an existing session, the existing group session can be reused.

In the present disclosure, if the in-conference attendees have a need to chat in a multimedia conference in progress, a group session may be created. By utilizing the group session associated with the multimedia conference, the attendees are set with their respective permissions according to whether they are members of the group session, and information of the group session matching the permissions of the attendees is displayed to the attendees.

After obtaining the information of the attendees, the execution subject may obtain the conference identifier from the information of the attendees, and then obtain appointed-participant information stored in advance according to the conference identifier. Thereafter, the attendee identifiers in the information of the attendees is matched with information of the appointed participants. If the match is successful, the attendees belong to the appointed participants; otherwise, they do not belong to the appointed participants.

The determined access permission of the attendees to the group session may be the first permission or the second permission. The first permission is lower than the second permission.

The first permission being lower than the second permission may be manifested in that an attendee with the first permission cannot browse at least part of the messages in the group session, while an attendee with the second permission can browse the at least part of the messages, etc.

The at least part of the messages mentioned above may be at least one message determined according to a message posting time.

After determining the access permission of the attendee in step S202, the information of the group session matching the access permission may be displayed to the attendee according to the permission thereof.

Illustratively, if the attendee has the first permission, the information of the group session in which the part of the messages described above is blocked is displayed to the attendee. If the attendee has the second permission, the information of the group session including the part of the messages described above is displayed to the attendee.

In this embodiment, the information of the attendees of the scheduled conference is obtained, the scheduled conference being a conference having a conference identifier before the conference starts; based on whether the attendees belong to appointed participants of the scheduled conference, the access permission of the attendees to the group session is determined, the access permission including a first permission or a second permission; the first permission being lower than the second permission, the group session being implemented in a predetermined manner; members of the group session including a plurality of appointed participants of the scheduled conference; and information of the group session is displayed to the attendees according to the permission. Since in a multimedia conference a group session associated with a multimedia conference can be created through a chat request or an existing group session can be reused, and information of the group session corresponding to the permission of the attendees of the scheduled conference can be sent to the attendees, it is possible to differentiate the chat information displayed to the appointed participants and the non-appointed participants through the group session corresponding to the scheduled conference. In this way, the chat content browsed by the attendees matches the attendance identities of the attendees, which is conducive to improving the information security of the in-conference chat messages.

In some embodiments, the above step S202 comprises:
in response to determining that the attendee belongs to an appointed participant, determining that the attendee has a second permission.

The above step S203 comprises:
according to the second permission, during the scheduled conference or after the completion of the scheduled conference, displaying the information of the group session on the relevant page of the scheduled conference displayed to the attendee.

In these embodiments, the execution subject may match the information of the attendee with information of an appointed participant, and if the match is successful, it is determined that the attendee is the appointed participant. It is then determined that the attendee has the second permission. According to the second permission, the information of the group session matching the attendance identity of the attendee is displayed to the attendee, so that the attendee can browse the information of the group session during the conference or during non-conference periods, making it convenient for the appointed participant to view group session messages.

In some embodiments, the information processing method further comprises the following steps:
sending the information of the group session to an instant messaging application of the appointed participant, so that the information of the group session is displayed on a session flow display interface of the instant messaging application of the appointed participant.

In these embodiments, for the appointed participant, the execution subject may send the information of the group session associated with the scheduled conference to the instant messaging application of the appointed participant. When opening the session flow display interface of the instant messaging application, the appointed participant can browse the information of the group session on the session flow display interface.

It can be understood that, for a temporary attendee, the execution subject does not send the information of the group session to an instant messaging application of the temporary attendee, so that the information of the group session cannot be displayed on a session flow display interface of the instant messaging application the temporary attendee.

That is, besides browsing the information of the group session on a relevant display page of the scheduled conference displayed on a terminal device used by the appointed participant, the appointed participant can also browse the information of the group session associated with the scheduled conference on a session flow display page, further making it convenient for the appointed participant to view the information of the group session associated with the scheduled conference.

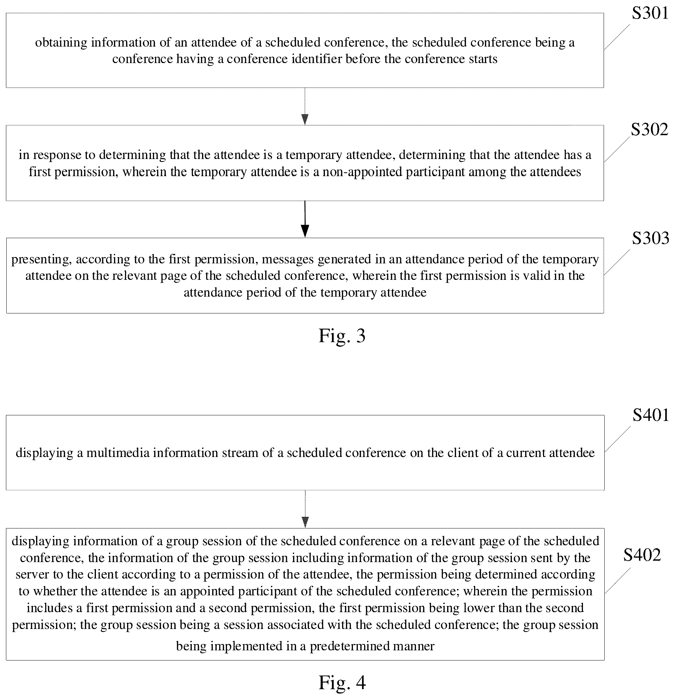

Referring to FIG. 3 , it shows a second schematic flowchart of an information processing method provided by an embodiment of the present disclosure. As shown in FIG. 3, the information processing method comprises the following steps:
S301: obtaining information of an attendee of a scheduled conference, the scheduled conference being a conference having a conference identifier before the conference starts.

The execution subject of the information processing method of this embodiment may be a server that provides services for a multimedia conference.

For step S301, reference can be made to step S201 of the embodiment shown in FIG. 2, which will not be described in detail here.

The scheduled conference may have a pre-created schedule associated with the scheduled conference.

S302: in response to determining that the attendee is a temporary attendee, determining that the attendee has a first permission, wherein the temporary attendee is a non-appointed participant among the attendees.

If it is determined by the execution subject that the attendee is a non-appointed participant, it can be determined that the attendee is a temporary attendee, and it can be further determined that the attendee has the first permission. The execution subject can set the first permission for the attendee.

In some embodiments, the scheduled conference is one conference among periodic conferences; and step S302 comprises:
in response to determining that the attendee is a non-appointed participant of the periodic conferences and does not belong to a member of a group session associated with the periodic conferences, determining that the attendee is a temporary attendee.

In these embodiments, for the periodic conferences, the multiple conferences may correspond to one and the same conference identifier. Correspondingly, the group sessions associated with the periodic conferences may be one and the same group session, making it convenient for the appointed participants of the periodic conferences to view in the same group session the chat records corresponding to respective ones of the periodic conferences.

For the periodic conferences, at the time of determining whether an attendee is a temporary attendee, it is necessary to determine whether the attendee is an appointed participant of the periodic conferences. If not, it is also necessary to determine whether the attendee is a member of the group session associated with the periodic conferences. If the attendee is neither the appointed participant nor the member of the group session associated with the periodic conferences, the attendee is a temporary attendee.

S303: presenting, according to the first permission, messages generated in an attendance period of the temporary attendee on the relevant page of the scheduled conference, wherein the first permission is valid in the attendance period of the temporary attendee.

In some application scenarios, since the temporary attendee has the first permission, for the temporary attendee, the messages generated in the attendance period of the temporary attendee may be displayed on a relevant page of a multimedia conference presented to the temporary attendee.

Specifically, after the temporary attendee joins the scheduled conference, the server may record the time when the temporary attendee enters, and then open the first permission to the group session for the temporary attendee after the entering time and before the exit time of the temporary attendee.

The temporary attendee may browse, according to the first permission, the messages generated in the attendance period of the temporary attendee on the relevant page of the scheduled conference.

After the temporary attendee exits the scheduled conference, the messages in the group session of the scheduled conference are no longer presented to the temporary attendee.

The first permission is valid in the attendance period of the temporary attendee, that is, during a period from the time when the temporary attendee enters the scheduled conference to the time when the temporary attendee leaves the scheduled conference, the first permission is valid. At other time, the first permission is invalid. The messages generated in the validity period of the first permission are messages generated in the group session during the period from the time when the temporary attendee enters the scheduled conference to the time when the temporary attendee leaves the scheduled conference.

In some application scenarios, after the temporary attendee leaves the scheduled conference, the temporary attendee cannot view any information of the group session, so that the security of the information of the group session can be improved.

Compared with the embodiment shown in FIG. 2, this embodiment highlights that the temporary attendee who is not an appointed participant may be presented information of the group session generated in the attendance period of the temporary attendee. The group session is associated with the scheduled conference, the content of the group session is generally related to the multimedia information stream of the scheduled conference, and the temporary attendee can know about the content of the multimedia information stream of the scheduled conference during the attendance period. Thus, presenting the temporary attendee the information of the group session generated during the period, i.e., presenting the temporary attendee the information of the group session matching the identity of the temporary attendee, on the one hand helps the temporary attendee to quickly know about the content of the scheduled conference generated in his attendance period, and on the other hand helps to improve the security of the information of the group session.

In some embodiments, the information processing method further comprises:
in the validity period of the first permission, receiving new chat messages sent by the temporary attendee, and forwarding the new chat messages to the client of each attendee, so that each client displays the new chat messages in the group session.

In the validity period of the first permission, the temporary attendee may enter chat messages in a message input window provided on a group session display page. The message input window supports the input of the following types of messages: text, symbols, images, graphics, videos and/or documents, etc.

The new chat messages here may include text, symbols, images, graphics, videos and/or documents, etc.

That is, in the validity period of the first permission, the temporary attendee can not only browse the information of the group session, but send chat messages, etc. In the validity period of the first permission, the temporary attendee can well participate in the group session, and can be provided with a good in-conference chat experience.

In some embodiments, the information processing method further comprises:
limiting a browsing permission of the temporary attendee to documents in the group session.

The documents include documents in the group session outside the attendance period of the temporary attendee, and may also include documents sent by other attendees in the group session in the attendance period of the temporary attendee.

In one example, the documents in the group session may be online documents that need to be opened via a link, and in this example, the link is visible to the temporary attendee. The temporary attendee may perform a trigger operation on the link. Upon receiving the trigger operation performed by the temporary attendee on the link, prompt information indicating that the temporary attendee has no permission to browse may be displayed to the temporary attendee.

Generally, the documents may record much information. By limiting the browsing permission of the temporary attendee to the documents in the group session, the security of the information of the group session can be further improved.

In some embodiments, the information processing method further comprises:

In response to detecting that the temporary attendee leaves the scheduled conference, revoking the first permission.

The temporary attendee can leave the scheduled conference in various ways. For example, the temporary attendee may leave the scheduled conference by triggering a control in a page corresponding to the scheduled conference for instructing to exit the multimedia conference to perform a trigger operation.

The client of the temporary attendee may send information that the temporary attendee leaves the conference to the execution subject, and upon receiving the information, the execution subject may revoke the first permission. In addition, the execution subject may also record the exit time of the temporary attendee.

Since the first permission is revoked, it is invalid, and messages generated thereafter in the group session will not be presented to the temporary attendee.

Usually, after the temporary attendee leaves the scheduled conference, the temporary attendee cannot view any information of the group session, thereby preventing the information of the group session from being leaked. In some embodiments, the information processing method further comprises:

in response to receiving a view request of the temporary attendee for the group session after the temporary attendee leaves the scheduled conference, displaying messages generated in the attendance period of the temporary attendee to the temporary attendee.

In some application scenarios, the temporary attendee has the need to review the chat content in the group session during his attendance, and in these application scenarios, the temporary attendee may send a view operation for the group session to the execution subject. Upon receiving the view operation, the execution subject may display, to the temporary attendee, the chat messages in the group session generated in the attendance period of the temporary attendee.

The view request sent by the temporary attendee to the execution subject may carry an identifier of the temporary attendee and an identifier of the scheduled conference/group session. The execution subject may check the attendance period of the temporary attendee according to the identifier of the scheduled conference/group session and the identifier of the temporary attendee, and if it exists, the messages in the group session generated in the attendance period are sent to the temporary attendee.

In these embodiments, by displaying to the temporary attendee the messages generated in his attendance period according to the view request for the group session executed by the temporary attendee after leaving the scheduled conference, convenience is provided to the temporary attendee, which is conducive to improving the experience of the temporary attendee.

In some embodiments, the information processing method comprises:
setting the temporary attendee as a member of the group session according to one of the following operations:
an invite operation of a group session member with a preset permission, the invite operation being used to invite the temporary attendee to become a member of the group session;
a permit operation on application information performed by a group session member with a preset permission, the application information being initiated by the temporary attendee to apply to become a member of the group session.

In some application scenarios, the group session member with a preset permission may send the invite operation to the terminal device used by him or her. For example, the identifier of the temporary attendee is entered in a group session member invite portal displayed on the terminal device, and an "OK" control is triggered to send the invite operation. The terminal device may send the invite operation information to the execution subject. Upon receiving the invite operation, the execution subject may set the temporary attendee indicated by the invite operation as a group session member.

In some application scenarios, the temporary attendee may send the application information for applying to become a member of the group session to a group session member with a preset permission through the execution subject. Prompt information of the application information may be displayed on a schedule display interface of the group session member with the preset permission. The prompt information includes an identifier of the temporary attendee and information indicating that the temporary attendee applies to become a group session member. The prompt information may be displayed in the form of a card. The group session member with a preset permission may perform the permit operation on the prompt information displayed on his terminal device. The permit operation may be, for example, a trigger operation on a permission control displayed in the prompt information, which is performed by the group session member with a preset permission. The terminal device of the group session member with a preset permission may send information of the permit operation to the execution subject, and the execution subject sets the temporary attendee as a member of the group session according to the permit operation.

In these embodiments, by setting the temporary attendee as a group session member according to the invite operation or the permit operation, the temporary attendee is changed to a group session member according to actual needs.

In some embodiments, the permission of the temporary attendee becoming a group session member is changed from the first permission to a third permission, wherein the third permission is higher than the first permission and lower than or equal to the second permission.

In these embodiments, after being changed to a group session member, the temporary attendee becomes the group session member. In order to make it convenient to display more messages in the group session to the temporary attendee, the permission of the temporary attendee becoming a group session member may be changed to the third permission.

The third permission here is higher than the first permission and lower than or equal to the second permission; that is, the temporary attendee becoming a group session member can browse, with the third permission, the messages in the group session that cannot be browsed with the original first permission. Meanwhile, some relatively confidential messages may also not be displayed to the temporary attendee.

When the third permission of the temporary attendee becoming a group session member is equal to the second permission, the temporary attendee becoming a group session member has the same permission as the original appointed participant and can browse more messages in the group session.

In these embodiments, the permission of the temporary attendee becoming a group session member can be flexibly set in the above manner, so as to determine the information of the group session displayed to these temporary attendees becoming group session members, which ensures the security of the information of the group session to a certain extent.

In some embodiments, the information processing method further comprises:
not changing the appointed participant corresponding to the periodic conferences by an event that the temporary attendee becomes a group session member.

Addition of new members to the group session will not affect the appointed participant corresponding to periodic conferences, that is, the appointed participant will not be changed due to change in the members of the group session.

In these embodiments, keeping the appointed participant of the periodic conferences unchanged is conducive to identify the members of the group session, and further conducive to display the information of the group session to each group session member in a differentiated manner.

In some embodiments, the temporary attendees include:
attendees who join with a guest identity via the web client; or
attendees who join after the maximum capacity of the conference has been reached.

In some application scenarios, the multimedia information stream of the scheduled conference may be displayed on the web client. For a non-appointed participant, he can join the scheduled conference as a guests on the web client.

In these application scenarios, the execution subject may set the attendee as a temporary attendee while retaining his/her guest identity. An identifier corresponding to the guest identity is displayed in display information of the temporary attendee in the information of the group session. The identifier corresponding to the guest identity includes an virtual character and/or text, making it convenient for each group session member to identify the temporary attendee as a guest.

In some application scenarios, for a network multimedia conference with an attendee upper-limit, after the appointed participants have reached the upper limit, users other than the appointed participants need to participate in the scheduled conference, and these other users may participate in the scheduled conference as a temporary attendee, so that the capacity of the network multimedia conference can be expanded and the problem that other users cannot join the conference after the appointed participants have reached the upper limit can be solved.

Referring to FIG. 4, which shows a schematic flowchart of an information processing method provided by an embodiment of the present disclosure. As shown in FIG. 4, the information processing method comprises the following steps:
S401: displaying a multimedia information stream of a scheduled conference on the client of a current attendee.

In this embodiment, the execution subject of the information processing method may be a terminal device used by the attendee.

The current attendee here may be any attendee of the scheduled conference, either an appointed participant or a temporary attendee.

The multimedia information stream is composed of continuous audio/video information of respective ones of a plurality of attendees.

In some embodiments, the client may be a web multimedia conferencing client or an application client supporting multimedia conferencing installed in a terminal device.

S402: displaying information of a group session of the scheduled conference on a relevant page of the scheduled conference, the information of the group session including information of the group session sent by the server to the client according to a permission of the attendee, the permission being determined according to whether the attendee is an appointed participant of the scheduled conference; wherein the permission includes a first permission and a second permission, the first permission being lower than the second permission; the group session being a session associated with the scheduled conference; the group session being implemented in a predetermined manner. The predetermined manner here may include at least one of: creating a group session according to a chat request initiated by the attendee during the conference, and reusing an existing group session.

The chat request may be initiated by any attendee.

In some application scenarios, the relevant page of the scheduled conference may be a page that displays the multimedia information stream of the scheduled conference.

In these application scenarios, the page displaying the multimedia information stream of the scheduled conference may concurrently display the multimedia information stream and the information of the group session. For example, two non-overlapping areas on the page display the multimedia information stream and the information of the group session, respectively.

In some application scenarios, the relevant page of the scheduled conference may include a page of the scheduled conference that is different from the page displaying the multimedia information stream.

The scheduled conference may have different pages, such as the page displaying the multimedia information stream, and the page displaying the information of the group session associated with the scheduled conference.

In these application scenarios, when browsing the page displaying the multimedia information stream in the scheduled conference, the attendee may issue a page switching operation, and according to the page switching operation, the page displaying the multimedia information stream is switched to the page displaying the information of the group session.

The server may determine whether the current attendee is an appointed participant based on the information of the current attendee, and then determine a permission of the current attendee to access the group session.

In one example, the permission of the current attendee may be the first permission, and then the displayed information of the group session is information of a group session matching the first permission.

In one example, the permission of the current attendee may be the second permission, and then the displayed information of the group session is information of a group session matching the second permission.

The first permission is lower than the second permission, and the information of the group session matching the second permission includes messages other than the information of the group session matching the first permission.

In this embodiment, the multimedia information stream of the scheduled conference is displayed on the client of the current attendee; and the information of the group session of the scheduled conference is displayed on the relevant page of the scheduled conference, the information of the group session including the information of the group session sent by the server to the client according to a permission of the attendee, the permission being determined according to whether the attendee is an appointed participant of the scheduled conference; wherein the permission includes a first permission and a second permission, the first permission being lower than the second permission; the group session being a session associated with the scheduled conference; the group session being created according to a chat request initiated by the attendee during the conference or an existing group session is reused. The group session associated with the multimedia conference is created through the chat request in the multimedia conference or the existing group session is reused, the information of the group session corresponding to the permission of the attendee of the scheduled conference is sent to the attendee. Therefore, through the group session corresponding to the scheduled conference, chat information displayed to the appointed participants and the non-appointed participants can be differentiated, so that chat content browsed by the attendees can be matched with the attendance identities of the attendees, which is conducive to improving the information security of the in-conference chat messages.

In some embodiments, the current attendee is a temporary attendee that is a non-appointed participant among the attendees, and the permission of the current attendee is the first permission; and the information processing method further comprises:
first, receiving chat messages generated in the validity period of the first permission sent by the server; the first permission being valid in the attendance period of the current attendee.
second, displaying the chat messages on the relevant page of the scheduled conference.

For the description of the validity period of the first permission, reference may be made to the relevant illustration of the embodiment shown in FIG. 3, which will not be repeated here.

If the current attendee is a temporary attendee, after granting the first permission to the temporary attendee, the server may send the chat messages generated in the validity period of the first permission to the client used by the current attendee.

Upon receiving the chat messages, the client may display the chat messages generated in the group session in the validity period of the first permission on the relevant page of a preset conference.

In some application scenarios, the relevant page of the scheduled conference may be a page displaying a multimedia information stream of the scheduled conference.

In these application scenarios, the page displaying the multimedia information stream of the scheduled conference may concurrently display the multimedia information stream and the information of the group session. For example, two non-overlapping areas on the page display the multimedia information stream and the information of the group session, respectively.

In some application scenarios, the relevant page of the scheduled conference may be a page of the scheduled conference that is different from the page displaying the multimedia information stream.

A scheduled conference may have different pages, such as a page displaying a multimedia information stream and a page displaying information of a group session associated with the scheduled conference.

In these application scenarios, when browsing the page displaying the multimedia information stream in the scheduled conference, the attendee may issue a page switching operation, and according to the page switching operation, the page displaying the multimedia information stream is switched to the page displaying the information of the group session.

In these embodiments, displaying the chat messages generated in the attendance period of the temporary attendee of the scheduled conference on the relevant page of the scheduled conference of the temporary attendee is conducive to prevent other messages of the group session of the scheduled conference from being leaked, thereby helping to improve the security of group session information.

In some embodiments, the information processing method further comprises:
displaying, on the relevant page, prompt information indicating that the temporary attendee joins the conference.

It should be noted that the prompt information can be displayed on relevant pages of a plurality of members of the group session.

Specifically, the prompt information may be displayed in a display area for group session information on the relevant page.

In these embodiments, by displaying the prompt information to the members of the group session, on the one hand, the temporary attendee can be prompted to chat in the group session, and on the other hand, other members of the group session can be prompted to send, in subsequent chats, message content matching the scenario in which the temporary attendee participates, thereby ensuring information security.

In some embodiments, the information processing method further comprises:
displaying, on the relevant page, prompt information for indicating that the temporary attendee has no permission to browse historical messages.

In these embodiments, by displaying the prompt information to the temporary attendee, the temporary attendee is made aware that he has no permission to browse historical messages. In this way, it is convenient for the temporary attendee to know about relevant information of the group session.

In some embodiments, the information processing method further comprises:
first, displaying a message input window on the relevant page;
second, receiving new chat messages entered by the temporary attendee in the message input window, and sending the new chat messages to the server, causing the server to forward the new chat messages to a plurality of attendees.

In the validity period of the first permission, the temporary attendee may enter chat messages in the message input window provided on the group session display page. The message input window supports the input of the following types of messages: text, symbols, images, graphics, videos, documents, etc.

Thus, in the validity period of the first permission, the temporary attendee can well participate in the group session, and can be provided with a good in-conference chat experience at the same time when the information of the group session is displayed to the temporary attendee in a controllable manner.

In some embodiments, the information processing method further comprise:
in response to receiving a trigger operation by the temporary attendee on document information in the group session, displaying prompt information indicating that the temporary attendee has no permission to view.

The document information includes document information of documents in the group session outside the validity period of the first permission, and may also include document information of documents sent by other attendees in the group session in the validity period of the first permission.

In one example, the document information may be link information of an online document, and in this example, the link is visible to the temporary attendee. The temporary attendee may perform a trigger operation on the link. Upon receiving the trigger operation performed by the temporary attendee on the link, prompt information for indicating that the temporary attendee has no permission to browse may be displayed to the temporary attendee.

Generally, the documents may record much information. By limiting the browsing permission of the temporary attendee to the documents in the group session, information security of the group session can be further improved.

In some embodiments, the information processing method further comprises: in response to detecting that the temporary attendee leaves the scheduled conference, sending to the server prompt information that the temporary attendee exits the group session, causing the server to revoke the first permission.

The temporary attendee can leave the scheduled conference in various ways. For example, the temporary attendee may leave the scheduled conference by triggering a control in a page corresponding to the scheduled conference for instructing to exit the conference to perform a trigger operation.

The execution subject may send the prompt information to the server, and upon receiving the prompt information, the server may revoke the first permission.

Since the first permission is revoked, it is invalid, and messages generated thereafter in the group session will not be presented to the temporary attendee, thereby achieving information security of the group session after the first permission.

In some embodiments, the information processing method further comprises: in response to detecting that the temporary attendee leaves the scheduled conference, displaying, on the relevant page, prompt information indicating that the temporary attendee leaves the conference.

It can be understood that the prompt information can be sent to clients of a plurality of group session members. The plurality of members can browse the prompt information in the information of the group session, which indicates that the temporary attendee leaves the scheduled conference. The prompt information may include an identifier of the temporary attendee who leaves the scheduled conference.

The attendees can learn from the prompt information that the temporary attendee leaves the scheduled conference.

In some embodiments, the client is a web multimedia conference client; the temporary attendee accesses, with a guest identity, the scheduled conference on the web multimedia conference client.

Furthermore, the information processing method further comprises:
displaying a guest identifier in the information of the temporary attendee of the group session.

In some application scenarios, the multimedia information stream of the scheduled conference may be displayed on the web multimedia conference client. For a non-appointed participant, he can join the scheduled conference with a guest identity on the web client.

In these application scenarios, an identifier corresponding to the guest identity may be displayed in display information of the temporary attendee in the information of the group session. The identifier corresponding to the guest identity includes an virtual character and/or text, making it convenient for each group session member to identify the temporary attendee as a guest.

In some embodiments, the current attendee is a temporary attendee, and the information processing method further comprises the following steps:
in response to receiving a query operation for querying the group session performed by the current attendee on a session flow display interface, displaying prompt information indicating that the group session is not present.

The session flow may be a session flow in an instant messaging application of the current attendee.

In these embodiments, the current attendee may open the instant messaging application during the multimedia conference, and may also open the instant messaging application after the multimedia conference. The session flow is browsed in the opened instant messaging application. In the instant messaging application of the temporary attendee, the temporary attendee cannot browse the information of the group session associated with the scheduled conference. For having not actually joined the group, the temporary attendee cannot view the information of the group session in the session flow of the instant messaging application, nor can he search for the information of the group session. That is, there is no group session associated with the scheduled conference in the session flow of the instant messaging application of the temporary attendee. In other words, the temporary attendee can only browse the information of the group session on the relevant page of the multimedia conference in his attendance period. In these embodiments, the temporary attendee cannot browse the information of the group session associated with the scheduled conference in the session flow, thereby further ensuring the security of the group session information.

In some embodiments, the group session is created based on a chat request of an attendee on the basis of the following steps:
During the scheduled conference in progress, in response to receiving a chat request initiated by an attendee on a multimedia conference interface, sending a create request for creating a group session associated with the scheduled conference to the server, causing the server to create the group session according to the create request.

In practice, the attendee who sends the chat request may be any attendee. Before any attendee initiates a chat request, the scheduled conference is not associated with a group session. There is no group session information on a display interface of the attendee's scheduled conference.

As an implementation mode, a chat initiation control may be displayed on a display interface of a multimedia conference. Any attendee can perform a trigger operation on the chat control on the display interface of the multimedia conference corresponding thereto, thereby initiating a chat initiation request to the client used by the attendee. The client may send a group session create request to the server. The group session create request may include an identifier of the scheduled conference.

The server may create a group session and associate the group session with the scheduled conference.

In these embodiments, upon having the need to chat in the scheduled conference, the attendee may directly initiate a chat request on the display interface of the multimedia conference, so that the server creates a group session and then displays information of the group session on a relevant interface of the multimedia conference. After that, the attendee can chat in the group session.

Usually, in-conference group chat is implemented in the following manner: when the multimedia conference is in progress, upon having the need to chat, the attendee needs to exit the multimedia conference interface, enter the instant messaging application, initiate a group session in the instant messaging application, and then the attendees perform group chat in the group session of the instant messaging application. Compared with the implementation of the in-conference group chat described above, the solutions provided by these embodiments enable the attendee to directly initiate a group session on the display interface of the multimedia conference and use the group session to chat thereon, thereby avoiding, in case of a chat need during the conference, exiting a conference interface, entering an instant messaging interface and then initiating a chat request, thus simplifying the operations of the attendee chatting in the conference.

In some embodiments, the information processing method further comprises the following steps:
first, in response to receiving a view request of the temporary attendee for viewing historical messages, sending a historical message view request to the server, causing the server to send authorization confirmation information to a group session member with a preset permission;
second, receiving historical messages sent by the server according to authorization information of the group session member with a preset permission;
finally, displaying the historical messages.

In these embodiments, since the temporary attendee does not have the permission to browse group session messages before he joins the scheduled conference, upon having the need to browse the historical messages before he joins the scheduled conference, the temporary attendee may send the view request to the client used by him. The client may forward the view request to the server. The server may forward the view request to the group session member with a preset permission. After being authorized by the group session member with a preset permission, the server may send the historical messages to the client of the temporary attendee. The client of the temporary attendee may display the historical messages on the relevant page of the scheduled conference.

In these embodiments, by displaying the historical messages to the temporary attendee with the authorization of the group session member with a preset permission, on the one hand, the historical messages of the group session can be browsed by the temporary attendee, and on the other hand, information security of the historical messages of the group session is in a controllable state.

In some embodiments, the information processing method further comprises the following steps:
receiving chat logs sent by the server according to the temporary attendee joining group session members, and displaying the chat logs on the relevant page.

In these embodiments, the group session member with a preset permission may invite the temporary attendee to become a group member.

Alternatively, the temporary attendee may send application information for applying to become a group session member to the group session member with a preset permission, and the group session member with a preset permission may allow the temporary attendee to become a group session member according to the application information.

The temporary attendee may join the group session by invitation or by active application, and become a group session member.

In these embodiments, after any temporary attendee becomes a group session member, the server may send chat logs of the group session to the client of the temporary attendee. The chat logs may include chat logs of the group session generated in the non-attendance period of the temporary attendee. The chat logs may include messages, documents, graphics and/or videos, etc.

In these embodiments, after the temporary attendee becomes a group session member, more messages of the group session are presented to the temporary attendee, so that the temporary attendee who becomes a group session member can further know about relevant information of the scheduled conference.

In some embodiments, the current attendee is an appointed participant, and the permission of the current attendee is the second permission; and the information processing method further comprises the following steps:
first, receiving a plurality of messages of the group session sent by the server according to the second permission; the second permission being valid in both the attendance period and the non-attendance period of the appointed participant;
second, displaying the plurality of messages of the group session on the relevant page of the scheduled conference displayed to the attendee.

In these embodiments, if the server detects that the current attendee is an appointed participant, it is determined that the attendee has the second permission.

The server may send the plurality of messages of the group session to the client of the current attendee according to the second permission. Since the second permission is valid in both the attendance period and the non-attendance period of the attendee, the attendee may browse the information of the group session in either the attendance period or the non-attendance period of the appointed participant, thus making it convenient for the appointed participant to view group session messages.

In some embodiments, the current attendee is an appointed participant, and the information processing method further comprises the following steps:
first, receiving a session flow sent by the server;
second, displaying the session flow according to a session flow browsing request of the attendee, the session flow including information of the group session.

In these embodiments, for the appointed participant, the server may set the group session associated with the scheduled conference in the session flow of the appointed participant according to the second permission. When the appointed participant opens the session flow on the client, he may browse the information of the group session associated with the scheduled conference in the session flow.

That is, the appointed participant may display the information of the group session on a relevant display page of the scheduled conference displayed on the terminal device used by him, and may also display the information of the group session associated with the scheduled conference on a display page of the session flow, thus further making it convenient for the appointed participant to view the information of the group session associated with the scheduled conference.

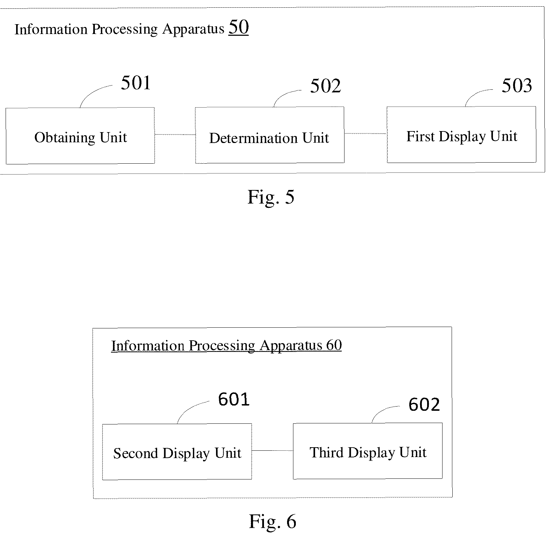

Corresponding to the above information processing method of the embodiment shown in FIG. 2, FIG. 5 is a schematic structural block diagram of an information processing apparatus provided by an embodiment of the present disclosure. For ease of explanation, only parts related to the embodiment of the present disclosure are shown. Referring to FIG. 5, the apparatus 50 comprises: an obtaining unit 501, a determination unit 502, and a first display unit 503, wherein

The obtaining unit 501 is configured to obtain information of an attendee of a scheduled conference, the scheduled conference being a conference having a conference identifier before the conference starts;

The determination unit 502 is configured to determine an access permission of the attendee to a group session based on whether the attendee belongs to an appointed participant of the scheduled conference, the access permission including a first permission or a second permission; the first permission being lower than the second permission, the group session being implemented in a predetermined manner (the predetermined manner may comprise at least one of: creating a group session based on a chat request of the attendee of the scheduled conference, and reusing an existing group session); members of the group session including a plurality of appointed participants of the scheduled conference;

The first display unit 503 is configured to present information of the group session to the attendee according to the permission.

In one embodiment of the present disclosure, the determination unit 502 is further configured to:
in response to determining that the attendee is a temporary attendee, determine that the attendee has the first permission, wherein the temporary attendee is a non-appointed participant among the attendees.

In one embodiment of the present disclosure, the first permission is valid in an attendance period of the temporary attendee; the first display unit 503 is further configured to:
present messages generated in the attendance period of the temporary attendee on a relevant page of the scheduled conference according to the first permission.

In one embodiment of the present disclosure, the apparatus 50 further comprises a forwarding unit (not shown in the figure), which is configured to:
in a validity period of the first permission, receive new chat messages sent from the temporary attendee, and forward the new chat messages to a client of each attendee, causing each client to display the new chat messages in the group session.

In one embodiment of the present disclosure, the apparatus 50 further comprises a limiting unit (not shown in the figure), which is configured to limit a browsing permission of the temporary attendee to documents in the group session.

In one embodiment of the present disclosure, the first display unit 503 is further configured to:
in response to receiving a view request of the temporary attendee for the group session after the temporary attendee leaves the scheduled conference, display messages generated in the attendance period of the temporary attendee to the temporary attendee.

In one embodiment of the present disclosure, the scheduled conference is a non-periodic scheduled conference or one conference among periodic conferences.

In one embodiment of the present disclosure, the scheduled conference is one conference among periodic conferences; and the determination unit 502 is further configured to:
in response to determining that the attendee is a non-appointed participant of periodic conferences and does not belong to a member of a group session associated with periodic conferences, determining that the attendee is a temporary attendee.

In one embodiment of the present disclosure, the apparatus 50 further comprises a setting unit (not shown in the figure). The setting unit sets the temporary attendee as a member of the group session according to one of the following operations:
an invite operation of a group session member with a preset permission, the invite operation being used to invite the temporary attendee to become a member of the group session;
a permit operation on application information performed by a group session member with a preset permission, the application information being initiated by the temporary attendee to apply to become a member of the group session.

In one embodiment of the present disclosure, an event that the temporary attendee becomes a group session member does not change the appointed participant corresponding to periodic conferences.

In one embodiment of the present disclosure, the setting unit is further configured to:
change the permission of the temporary attendee becoming a group session member from the first permission to a third permission, wherein the third permission is higher than the first permission and lower than or equal to the second permission.

In one embodiment of the present disclosure, the temporary attendees include:
attendees who join with a guest identity via a web client; or
attendees who join after the maximum capacity of the conference has been reached.

In one embodiment of the present disclosure, the determination unit 502 is further configured to:
in response to determining that the attendee belongs to an appointed participant, determine that the attendee has a second permission; and

The first display unit 503 is further configured to:
according to the second permission, during the scheduled conference or after the completion of the scheduled conference, displaying the information of the group session on the relevant page of the scheduled conference displayed to the attendee.

In one embodiment of the present disclosure, the apparatus 50 further comprises a session flow display unit (not shown in the figure), which is configured to:
send the information of the group session to an instant messaging application of the appointed participant, causing a session flow display interface of the instant messaging application of the appointed participant to display the information of the group session.

In one embodiment of the present disclosure, the scheduled conference has pre-created schedule information associated with the scheduled conference.

Corresponding to the above information processing method of the embodiment shown in FIG. 4, FIG. 6 is a schematic structural block diagram of an information processing apparatus provided by an embodiment of the present disclosure. For ease of explanation, only parts related to the embodiment of the present disclosure are shown. Referring to FIG. 6, the apparatus 60 comprises: a second display unit 601 and a third display unit 602, wherein,
the second display unit 601 is configured to display a multimedia information stream of a scheduled conference on a client of a current attendee;
the third display unit 602 is configured to display information of a group session of the scheduled conference on a relevant page of the scheduled conference, the information of the group session including information of the group session sent by a server to the client according to a permission of the attendee, the permission being determined according to whether the attendee is an appointed participant of the scheduled conference; wherein the permission includes a first permission and a second permission, the first permission being lower than the second permission; the group session is a session associated with the scheduled conference; the group session is implemented in a predetermined manner. The predetermined manner here may include at least one of: creating a group session according to a chat request initiated by the attendee during the conference, and reusing an existing group session.

In one embodiment of the present disclosure, the current attendee is a temporary attendee who is a non-appointed participant among the attendees, and the permission of the current attendee is the first permission; the first permission is valid in the attendance period of the temporary attendee; the apparatus 60 further comprises a first receiving unit (not shown in the figure), which is configured to:
receive chat messages generated in a validity period of the first permission sent by the server; the first permission being valid in the attendance period of the current attendee; and the third display unit 602 is further configured to:
display the chat messages on a relevant page of the scheduled conference.

In one embodiment of the present disclosure, the third display unit 602 is further configured to:
display, on the relevant page, prompt information indicating that the temporary attendee joins the conference.

In one embodiment of the present disclosure, the third display unit 602 is further configured to:
display, on the relevant page, prompt information indicating that the temporary attendee has no permission to browse historical messages.

In one embodiment of the present disclosure, the apparatus 60 further comprises a second sending unit (not shown in the figure), the third display unit 602 is further configured to:
display a message input window on the relevant page; and

The second sending unit is configured to:
receive new chat messages entered by the temporary attendee in the information input window, and send the new chat messages to the server, causing the server to forward the new chat messages to a plurality of attendees.

In one embodiment of the present disclosure, the apparatus 60 further comprises a third sending unit (not shown in the figure) and a second receiving unit (not shown in the figure). The third sending unit is configured to: in response to receiving a view request of the temporary attendee for viewing historical messages, send a historical message view request to the server, causing the server to send authorization confirmation information to a group session member with a preset permission; the second receiving unit is configured to: receive historical messages sent by the server according to authorization information of the group session member with a preset permission; the third display unit 602 is further configured to: display the historical messages.

In one embodiment of the present disclosure, the third display unit 602 is further configured to: in response to receiving a trigger operation by the temporary attendee on document information in the group session, display prompt information indicating that the temporary attendee has no permission to view.

In one embodiment of the present disclosure, the apparatus 60 further comprises a fourth sending unit (not shown in the figure).

The fourth sending unit is configured to: in response to detecting that the temporary attendee leaves the scheduled conference, send to the server prompt information that the temporary attendee exits the group session, causing the server to revoke the first permission.

In one embodiment of the present disclosure, the third display unit 602 is further configured to:
in response to detecting that the temporary attendee leaves the scheduled conference, display, on the relevant page, prompt information indicating that the temporary attendee leaves the conference.

In one embodiment of the present disclosure, the third display unit 602 is further configured to:
receive chat logs sent by the server according to the temporary attendee joining group session members, and display the chat logs on the relevant page.

In one embodiment of the present disclosure, the client is a web multimedia conference client; the temporary attendee accesses, with a guest identity, the scheduled conference on the web multimedia conference client.

In one embodiment of the present disclosure, the third display unit 602 is further configured to:
display a guest identifier in the information of the temporary attendee of the group session.

In one embodiment of the present disclosure, the current attendee is a temporary attendee, and the apparatus 60 further comprises a fourth display unit (not shown in the figure), which is configured to:
in response to receiving a query operation for querying the group session performed by the current attendee on a session flow display interface, display prompt information indicating that the group session is not present.

In one embodiment of the present disclosure, the apparatus 60 comprises a group session creation unit (not shown in the figure), which creates a group session associated with the scheduled conference based on the following steps:

During the scheduled conference in progress, in response to receiving a chat request initiated by an attendee on a multimedia conference interface, sending a create request for creating a group session associated with the scheduled conference to the server, causing the server to create the group session according to the create request.

In one embodiment of the present disclosure, the current attendee belongs to an appointed participant, and the permission of the current attendee is the second permission; and the apparatus 60 further comprises a third receiving unit (not shown in the figure), which is configured to:
receive a plurality of messages of the group session sent by the server according to the second permission; the second permission being valid in both the attendance period and the non-attendance period of the appointed participant.

The third display unit 602 is further configured to: display the plurality of messages of the group session on the relevant page of the scheduled conference displayed to the attendee.

In one embodiment of the present disclosure, the apparatus 60 further comprises a fourth receiving unit (not shown in the figure) and a fifth display unit (not shown in the figure), the fourth receiving unit being configured to:
receive a session flow sent from the server;
The fifth display unit is configured to: display the session flow according to a session flow browsing request of the attendee, the session flow including the information of the group session.

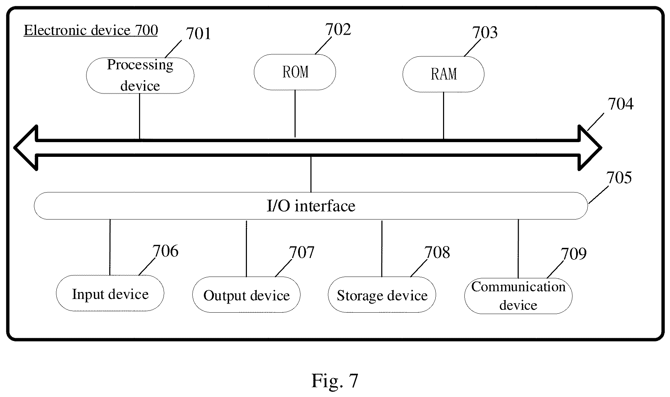

Referring to FIG. 7, it shows a schematic structural diagram of an electronic device 700 suitable for implementing an embodiment of the present disclosure. The electronic device 700 may be a terminal device or a server, wherein the terminal device may include, but is not limited to, mobile terminals such as mobile phones, laptop computers, digital broadcast receivers, personal digital assistants (briefly referred to as PDAs), portable Android devices (briefly referred to as PADs), portable media players (briefly referred to as PMPs), vehicle-mounted terminals (e.g., vehicle-mounted navigation terminals), etc., as well as fixed terminals such as digital TVs, desktop computers, etc. The electronic device shown in FIG. 7 is merely an example and should not limit the functions and scope of use of the embodiment of the present disclosure.

As shown in FIG. 7, the electronic device 700 may comprise a processing device (such as a central processing unit, a graphics processor, etc.) 701, which can perform various appropriate actions and processes according to a program stored in a read-only memory (briefly referred to as ROM) 702 or a program loaded from a storage device 708 to a random access memory (briefly referred to as RAM) 703. In the RAM 703, various programs and data necessary for the operation of the electronic device 700 are also stored. The processing device 701, the ROM 702, and the RAM 703 are connected to one another via a bus 704. An edit/output (I/O) interface 705 is also connected to the bus 704.

Typically, the following devices may be connected to the I/O interface 705: an input device 706 including, for example, a touch screen, a touchpad, a keyboard, a mouse, a camera, a microphone, an accelerometer, a gyroscope, etc.; an output device 707 including, for example, a liquid crystal display (briefly referred to as LCD), a speaker, a vibrator, etc.; a storage device 708 including, for example, a magnetic tape, a hard disk, etc.; and a communication device 707. The communication device 707 may allow the electronic device 700 to communicate with other devices wirelessly or by wire to exchange data. Although FIG. 7 shows the electronic device 700 possessing various devices, it should be understood that it is not required to implement or possess all of the devices shown. A greater or smaller number of devices may alternatively be implemented or provided.

In particular, according to an embodiment of the present disclosure, the process described above with reference to the flow chart may be implemented as a computer software program. For example, an embodiment of the present disclosure provides a computer program product, which comprises a computer program carried on a computer-readable medium, and the computer program contains program codes for executing the method shown in the flowchart. In such an embodiment, the computer program may be downloaded and installed from a network via the communication device 707, or installed from the storage device 708, or installed from the ROM 702. The computer program, when executed by the processing device 701, performs the above functions defined in the method of the embodiments of the present disclosure.

It should be noted that the computer-readable medium mentioned above in the present disclosure may be a computer-readable signal medium or a computer-readable storage medium or any combination of the two. The computer-readable storage medium may be, for example but not limited to, an electronic, magnetic, optical, electromagnetic, infrared, or semiconductor system, apparatus, or device, or any combination of the foregoing. More specific examples of computer-readable storage media may include, but are not limited to, an electrical connection having one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing. In the present disclosure, the computer-readable storage medium may be any tangible medium that contains or stores a program for use by or in connection with an instruction execution system, apparatus, or device. In the present disclosure, the computer-readable signal medium may include a data signal propagated in a baseband or as a part of a carrier wave, in which a computer-readable program code is carried. Such propagated data signals may take a variety of forms, including but not limited to electromagnetic signals, optical signals, or any suitable combination of the foregoing. The computer-readable signal medium may also be any computer-readable medium other than computer-readable storage media and can send, propagate, or transport a program for use by or in connection with an instruction execution system, apparatus, or device. The program code embodied on the computer-readable medium may be transmitted using any appropriate medium, including but not limited to: wire, optical cable, RF (radio frequency), etc., or any suitable combination of the foregoing.

The computer-readable medium may be included in the electronic device, or may exist independently without being incorporated into the electronic device.

The computer-readable medium carries one or more programs, which, when executed by an electronic device, causes the electronic device to perform the method according to the above embodiments.

Computer program code for performing operations of the present disclosure may be written in one or more programming languages, or a combination thereof, including but not limited to object-oriented programming languages such as Java, Smalltalk, C++, and conventional procedural programming languages such as "C" or similar programming languages. The program code may execute entirely on a user's computer, partly on the user's computer, as a stand-alone software package, partly on the user's computer and partly on a remote computer or entirely on the remote computer or server. In cases involving a remote computer, the remote computer may be connected to the user's computer through any type of network, including a local area network (briefly referred to as LAN) or a wide area network (briefly referred to as WAN), or may be connected to an external computer (e.g., through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, a program segment, or a portion of code, which contains one or more executable instructions for implementing the specified logical functions. It should also be noted that, in some alternative implementations, the functions noted in the blocks may occur out of the order noted in the figures. For example, two blocks shown in succession may, in fact, be executed substantially in parallel, or they may sometimes be executed in the reverse order, depending on the functionality involved. It should also be noted that each block in the block diagram and/or flowchart, and combinations of blocks in the block diagram and/or flowchart, can be implemented by a dedicated hardware-based system that performs the specified functions or operations, or can be implemented by a combination of dedicated hardware and computer instructions.

The involved units described in the embodiments in the present disclosure may be implemented by software or by hardware. In some cases, the name of a unit does not constitute a limitation on the unit itself. For example, an obtaining unit may also be described as a "unit that obtains information of an attendee of a scheduled conference".

The functions described above herein may be performed at least in part by one or more hardware logic components. For example, and without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include electrical connections based on one or more wires, a portable computer disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

The foregoing description is only exemplary of the preferred embodiments of the present disclosure and is illustrative of the principles of the technology employed. It will be appreciated by those skilled in the art that the scope of the disclosure herein is not limited to the particular combination of features described above, but also encompasses other combinations of features described above or equivalents thereof without departing from the spirit of the disclosure. For example, the above features and the technical features disclosed in the present disclosure (but not limited to) having similar functions are replaced with each other to form the technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. An information processing method, comprising:
obtaining information of an attendee of a scheduled conference, the scheduled conference being a conference having a conference identifier before the conference starts;
determining an access permission of the attendee to a group session based on whether the attendee belongs to an appointed participant of the scheduled conference, the access permission comprising a first permission or a second permission; the first permission being lower than the second permission, the group session being implemented in a predetermined manner; members of the group session comprising a plurality of appointed participants of the scheduled conference; and
presenting information of the group session to the attendee according to the permission.

2. The method according to claim 1, wherein the determining an access permission of the attendee to a group session based on whether the attendee belongs to an appointed participant of the scheduled conference comprises:
determining that the attendee has the first permission in response to determining that the attendee is a temporary attendee, wherein the temporary attendee is a non-appointed participant among the attendees.

3. The method according to claim 2, wherein the first permission is valid in an attendance period of the temporary attendee;
the presenting information of the group session to the attendee according to the permission comprises:
presenting, according to the first permission, messages generated in the attendance period of the temporary attendee on a relevant page of the scheduled conference.

4. The method according to claim 3, further comprising:
in a validity period of the first permission, receiving new chat messages sent from the temporary attendee, and forwarding the new chat messages to a client of each attendee, causing each client to display the new chat messages in the group session.

5. The method according to claim 4, further comprising:
limiting a browsing permission of the temporary attendee to documents in the group session.

6. The method according to any one of claims 2-5, further comprising:
in response to receiving a view request of the temporary attendee for the group session after the temporary attendee leaves the scheduled conference, displaying the messages generated in the attendance period of the temporary attendee to the temporary attendee.

7. The method according to any one of claims 2-6, wherein the scheduled conference is a non-periodic scheduled conference or one conference among periodic conferences.

8. The method according to claim 7, wherein the scheduled conference is one conference among periodic conferences; and the determining that the attendee has the first permission in response to determining that the attendee is a temporary attendee comprises:
in response to determining that the attendee is a non-appointed participant of periodic conferences and does not belong to a member of a group session associated with periodic conferences, determining that the attendee is a temporary attendee.

9. The method according to claim 8, further comprising:
setting the temporary attendee as a member of the group session according to one of the following operations:
an invite operation of a group session member with a preset permission, the invite operation being configured to invite the temporary attendee to become a member of the group session;
a permit operation on application information performed by a group session member with a preset permission, the application information being initiated by the temporary attendee to apply to become a member of the group session.

10. The method according to claim 9, further comprising:
not changing an appointed participant corresponding to periodic conferences by an event that the temporary attendee becomes a group session member.

11. The method according to claim 9 or 10, further comprising:
changing the permission of the temporary attendee becoming a group session member from the first permission to a third permission, wherein the third permission is higher than the first permission and lower than or equal to the second permission.

12. The method according to any one of claims 2-11, wherein the temporary attendees comprises:
attendees who join with a guest identity via a web client; or
attendees who join after the maximum capacity of the conference has been reached.

13. The method according to any one of claims 1-12, wherein the determining an access permission of the attendee to a group session based on whether the attendee belongs to an appointed participant of the scheduled conference comprises:
in response to determining that the attendee belongs to the appointed participant, determining that the attendee has the second permission; and
the presenting information of the group session to the attendee according to the permission comprises:
according to the second permission, during the scheduled conference or after the completion of the scheduled conference, displaying the information of the group session on the relevant page of the scheduled conference displayed to the attendee.

14. The method according to any one of claims 1-13, further comprising:
sending the information of the group session to an instant messaging application of the appointed participant, causing a session flow display interface of the instant messaging application of the appointed participant to display the information of the group session.

15. The method according to any one of claims 1-14, wherein the scheduled conference has pre-created schedule information associated with the scheduled conference.

16. The method according to any one of claims 1-15, wherein the predetermined manner comprises at least one of: creating a group session based on a chat request of the attendee of the scheduled conference, and reusing an existing group session.

17. An information processing method, comprising:
displaying a multimedia information stream of a scheduled conference on a client of a current attendee; and
displaying information of a group session of the scheduled conference on a relevant page of the scheduled conference, the information of the group session comprising information of the group session sent by a server to the client according to a permission of the attendee, the permission being determined according to whether the attendee is an appointed participant of the scheduled conference;
wherein the permission comprises a first permission and a second permission, the first permission being lower than the second permission; the group session is a session associated with the scheduled conference; and the group session is implemented in a predetermined manner.

18. The method according to claim 17, wherein the current attendee is a temporary attendee that is a non-appointed participant among the attendees, and the permission of the current attendee is the first permission; the first permission is valid in an attendance period of the temporary attendee; the method further comprising:
receiving chat messages generated in a validity period of the first permission sent by a server; the first permission being valid in the attendance period of the current attendee; and
displaying the chat messages on the relevant page of the scheduled conference.

19. The method according to claim 18, further comprising:
displaying, on the relevant page, prompt information indicating that the temporary attendee joins the conference.

20. The method according to claim 18 or 19, further comprising:
displaying, on the relevant page, prompt information indicating that the temporary attendee has no permission to browse historical messages.

21. The method according to any one of claims 18-20, further comprising:
displaying a message input window on the relevant page; and
receiving new chat messages entered by the temporary attendee in the information input window, and sending the new chat messages to the server, causing the server to forward the new chat messages to a plurality of attendees.

22. The method according to any one of claims 18-21, further comprising:
in response to receiving a view request of the temporary attendee for viewing historical messages, sending a historical message view request to the server, causing the server to send authorization confirmation information to a group session member with a preset permission;
receiving historical messages sent by the server according to authorization information of the group session member with a preset permission; and
displaying the historical messages.

23. The method according to any one of claims 18-22, further comprising:
in response to receiving a trigger operation by the temporary attendee on document information in the group session, displaying prompt information indicating that the temporary attendee has no permission to view.

24. The method according to any one of claims 18-23, further comprising:
in response to detecting that the temporary attendee leaves the scheduled conference, sending, to the server, prompt information that the temporary attendee exits the group session, causing the server to revoke the first association relationship.

25. The method according to any one of claims 18-24, further comprising:
in response to detecting that the temporary attendee leaves the scheduled conference, displaying, on the relevant page, prompt information indicating that the temporary attendee leaves the conference.

26. The method according to any one of claims 18-25, further comprising:
receiving chat logs sent by the server according to the temporary attendee joining group session members, and displaying the chat logs on the relevant page.

27. The method according to any one of claims 18-26, wherein the client is a web multimedia conference client; the temporary attendee accesses, with a guest identity, the scheduled conference on the web multimedia conference client.

28. The method according to claim 27, further comprising:
displaying a guest identifier in the information of the temporary attendee of the group session.

29. The method according to any one of claims 18-28, wherein the current attendee is a temporary attendee, the method further comprising:
in response to receiving a query operation for querying the group session performed by the current attendee on a session flow display interface, displaying prompt information indicating that the group session is not present.

30. The method according to any one of claims 18-29, wherein the group session is created based on the steps of:
during the scheduled conference in progress, in response to receiving a chat request initiated by the attendee on a multimedia conference interface, sending a create request for creating a group session associated with the scheduled conference to the server, causing the server to create the group session according to the create request.

31. The method according to any one of claims 17-30, wherein the current attendee belongs to the appointed participant, and the permission of the current attendee is the second permission; and the method further comprises:
receiving a plurality of messages of the group session sent by the server according to the second permission; the second permission being valid in both an attendance period and a non-attendance period of the appointed participant;
displaying the plurality of messages of the group session on the relevant page of the scheduled conference displayed to the attendee.

32. The method according to claim 31, further comprising:
receiving a session flow sent by the server;
displaying the session flow according to a session flow browsing request of the attendee, the session flow comprising information of the group session.

33. The method according to any one of claims 17-32, wherein the predetermined manner comprises at least one of: creating a group session according to a chat request initiated by the attendee during the conference, and reusing an existing group session.

34. An information processing apparatus, comprising:
an obtaining unit, configured to obtain information of an attendee of a scheduled conference, the scheduled conference being a conference having a conference identifier before the conference starts;
a determination unit, configured to determine an access permission of the attendee to a group session based on whether the attendee belongs to an appointed participant of the scheduled conference, the access permission comprising a first permission or a second permission; the first permission being lower than the second permission, the group session being implemented in a predetermined manner; members of the group session comprising a plurality of appointed participants of the scheduled conference; and
a first display unit, configured to present information of the group session to the attendee according to the permission.

35. An information processing apparatus, comprising:
a second display unit, configured to display a multimedia information stream of a scheduled conference on a client of a current attendee; and
a third display unit, configured to display information of a group session of the scheduled conference on a relevant page of the scheduled conference, the information of the group session comprising information of the group session sent by a server to the client according to a permission of the attendee, the permission being determined according to whether the attendee is an appointed participant of the scheduled conference; wherein the permission comprises a first permission and a second permission, the first permission being lower than the second permission; the group session is a session associated with the scheduled conference; and the group session is implemented in a predetermined manner.

36. An electronic device, comprising: a processor and a memory;
wherein the memory stores computer execution instructions;
the processor executes the computer execution instructions stored in the memory, causing the processor to perform the information processing method according to any one of claims 1 to 33.

37. A computer-readable storage medium, in which computer execution instructions are stored, wherein a processor, when executing the computer execution instructions, implements the information processing method according to any one of claims 1 to 31.

38. A computer program, in which computer execution instructions are stored, wherein a processor, when executing the computer execution instructions, implements the information processing method according to any one of claims 1 to 33.
